# EUROPEAN PATENT APPLICATION

(11) **EP 4 372 997 A1**
(43) Date of publication of application: **22.05.2024**
(21) Application number: 22876813.1
(22) Date of filing: 28.09.2022
(51) Int. Cl.: H04B 1/50, H04B 1/00, H04W 76/15

(54) **ELECTRONIC DEVICE FOR PROVIDING DUAL CONNECTIVITY**

(30) Priority: 01.10.2021 KR 20210130952
(71) Applicant: Samsung Electronics Co., Ltd., Suwon-si, Gyeonggi-do 16677 (KR)
(72) Inventor: YOO, Jangsun, Suwon-si Gyeonggi-do 16677 (KR); LEE, Hanyeop, Suwon-si Gyeonggi-do 16677 (KR); MOON, Jihye, Suwon-si Gyeonggi-do 16677 (KR); SHIN, Yongjoo, Suwon-si Gyeonggi-do 16677 (KR); LEE, Myeonggil, Suwon-si Gyeonggi-do 16677 (KR); LEE, Jongin, Suwon-si Gyeonggi-do 16677 (KR); JANG, Jongbok, Suwon-si Gyeonggi-do 16677 (KR); LIM, Gun, Suwon-si Gyeonggi-do 16677 (KR)
(74) Representative: Nederlandsch Octrooibureau
(86) International application number: PCT/KR2022/014500
(87) International publication number: WO 2023/055041

(57) **Abstract**

According to an embodiment, the electronic device relates to an electronic device for providing dual connectivity of a second frequency band, and may include a communication unit including a plurality of communication ports, a first antenna connected to a first communication port of the plurality of communication ports and configured to transmit a signal of a first band of a first frequency band, and a second antenna connected to a second communication port of the plurality of communication ports and configured to transmit a signal of a second band different from the first band of the first frequency band while the signal of the first band is transmitted. The second frequency band includes at least one frequency band selected from the group consisting of the first frequency band and a frequency band higher than the first frequency band.

## Description

### Technical Field

The present description relates to an electronic device for providing dual connectivity.

### Background Art

The use of electronic devices having wireless communication functions, such as data communication (e.g., the Internet), has increased. Various technologies to utilize a next-generation network (e.g., fifth generation new radio (5G NR)) have been developed to provide a high-speed mobile communication function to a user.

### Disclosure of Invention

### Solution to Problem

According to an embodiment, the electronic device relates to an electronic device for providing dual connectivity of a second frequency band, and may include a communication unit including a plurality of communication ports, a first antenna connected to a first communication port of the plurality of communication ports and configured to transmit a signal of a first band of a first frequency band, and a second antenna connected to a second communication port of the plurality of communication ports and configured to transmit a signal of a second band different from the first band of the first frequency band while the signal of the first band is transmitted, the second frequency band comprising at least one frequency band selected from the group consisting of the first frequency band and a frequency band higher than the first frequency band.

According to an embodiment, the electronic device relates to an electronic device for providing dual connectivity of a second frequency band, may include a housing including a first side surface, a second side surface opposite to the first side surface, a third side surface between the first side surface and the second side surface, and a fourth side surface opposite to the third side surface and between the first side surface and the second side surface, a communication unit located adjacent to the first side surface in the housing and including a plurality of communication ports, a first antenna located adjacent to the second side surface in the housing, connected to a first communication port of the plurality of communication ports, and configured to transmit a signal of a first band of a first frequency band, and a second antenna located adjacent to the first side surface in the housing, connected to a second communication port of the plurality of communication ports, and configured to transmit a signal of a second band different from the first band of the first frequency band while the signal of the first band is transmitted, the second frequency band comprising at least one frequency band selected from the group consisting of the first frequency band and a frequency band higher than the first frequency band.

According to an embodiment, the communication module relates to a communication module for providing dual connectivity of a second frequency band, may include a first communication port for transmitting a signal of a first band of a first frequency band, a second communication port for transmitting a signal of a second band different from the first band of the first frequency band while the signal of the first band is transmitted, the second frequency band comprising at least one frequency band selected from the group consisting of the first frequency band and a frequency band higher than the first frequency band, a third communication port located between the first communication port and the second communication port and for receiving a signal of a GPS band, and a fourth communication port located between the second communication port and the third communication port and for transmitting a signal of a band that does not overlap the first frequency band of the second frequency band. The first communication port, the third communication port, the fourth communication port, and the second communication port may be sequentially arranged in a row.

According to an embodiment, a method is provided that includes defining a first frequency band, defining a second frequency band, the second frequency band comprising at least one frequency band selected from the group consisting of the first frequency band and a frequency band higher than the first frequency band, transmitting, by a first antenna connected to a first communication port of a plurality of communication ports of an electronic device, a first signal of a first band of the first frequency band, and transmitting, by a second antenna connected to a second communication port of the plurality of communication ports of the electronic device, a second signal of a second band different from the first band of the first frequency band while the first signal of the first band is transmitted.

### Brief Description of Drawings

The above and other aspects, features, and advantages of certain embodiments of the present disclosure will be more apparent from the following detailed description, taken in conjunction with the accompanying drawings, in which:
FIG. 1 is a block diagram illustrating an electronic device in a network environment according to various embodiments;
FIG. 2 is a perspective view illustrating the electronic device according to various embodiments;
FIG. 3A is a diagram schematically illustrating the electronic device according to an embodiment;
FIG. 3B is a diagram schematically illustrating a communication module according to an embodiment;
FIG. 4 is a diagram schematically illustrating the electronic device according to an embodiment;
FIG. 5 is a diagram schematically illustrating the electronic device according to an embodiment;
FIG. 6 is a diagram schematically illustrating the electronic device according to an embodiment; and
FIG. 7 is a flow diagram of a method according to an embodiment.

### Mode for the Invention

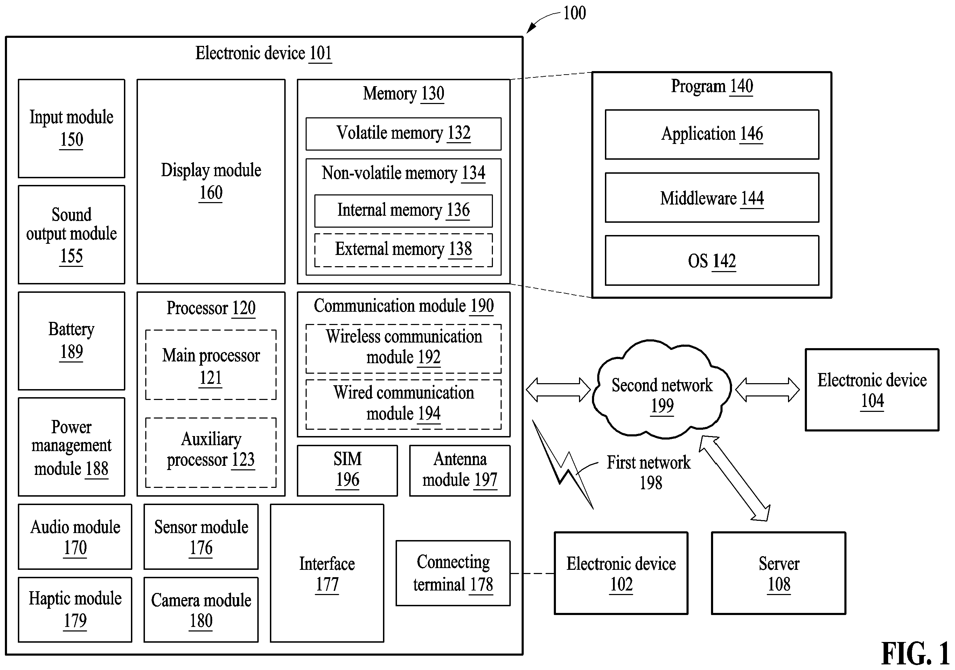

Referring to FIG. 1, the electronic device 101 in the network environment 100 may communicate with an electronic device 102 via a first network 198 (e.g., a short-range wireless communication network), or communicate with at least one of an electronic device 104 and a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a motor 187, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computations. According to an embodiment, as at least a part of data processing or computations, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specifically for artificial intelligence model processing. An artificial intelligence model may be generated by machine learning. The machine learning may be performed by, for example, the electronic device 101, in which artificial intelligence is performed, or performed via a separate server (e.g., the server 108). Learning algorithms may include, but are not limited to, for example, supervised learning, unsupervised learning, semi-supervised learning, or reinforcement learning. The artificial intelligence (AI) model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive, from outside (e.g., a user) the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a control circuit for controlling a display, a hologram device, or a projector and control circuitry to control its corresponding one of the display, the hologram device, and the projector. According to an embodiment, the display module 160 may include a touch sensor adapted to detect a touch, or a pressure sensor adapted to measure the intensity of force of the touch.

The audio module 170 may convert sound into an electric signal or vice versa. According to an embodiment, the audio module 170 may obtain the sound via the input module 150 or output the sound via the sound output module 155 or an external electronic device (e.g., the electronic device 102, such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used by the electronic device 101 to couple with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may physically connect to an external electronic device (e.g., the electronic device 102). According to an embodiment, the connecting terminal 178 may include, for example, an HDMI connector, a USB connector, an SD card connector, or an audio connector (e.g., a headphones connector).

The haptic module 179 may convert an electric signal into a mechanical stimulus (e.g., a vibration or a movement) or an electrical stimulus, which may be recognized by a user via their tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, and flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device, for example, the electronic device 104, via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., an antenna array). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to various embodiments, the antenna module 197 may form a mmWave antenna module. According to an embodiment, the mmWave antenna module may include a PCB, an RFIC on a first surface (e.g., the bottom surface) of the PCB, or adjacent to the first surface of the PCB and capable of supporting a designated high-frequency band (e.g., a mmWave band), and a plurality of antennas (e.g., array antennas) disposed on a second surface (e.g., the top or a side surface) of the PCB, or adjacent to the second surface of the PCB and capable of transmitting or receiving signals of the designated high-frequency band.

At least some of the above-described components may be coupled mutually and exchange signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device (e.g., the electronic device 104) via the server 108 coupled with the second network 199. Each of the external electronic devices (e.g., the electronic device 102 or 104) may be a device of the same type as or a different type from the electronic device 101. According to an embodiment, all or some of operations to be executed by the electronic device 101 may be executed by one or more external electronic devices (e.g., the electronic devices 102 and 104 and the server 108). For example, if the electronic device 101 needs to perform a function or a service automatically, or in response to a request from a user or another device, the electronic device 101, instead of, or in addition to, executing the function or the service, may request the one or more external electronic devices to perform at least part of the function or service. The one or more external electronic devices receiving the request may perform the at least part of the function or service, or an additional function or an additional service related to the request and may transfer a result of the performance to the electronic device 101. The electronic device 101 may provide the result, with or without further processing the result, as at least part of a response to the request. To that end, cloud computing, distributed computing, mobile edge computing (MEC), or client-server computing technology may be used, for example. The electronic device 101 may provide ultra low-latency services using, e.g., distributed computing or MEC. In an embodiment, the external electronic device (e.g., the electronic device 104) may include an Internet-of-things (IoT) device. The server 108 may be an intelligent server using machine learning and/or a neural network. According to an embodiment, the external electronic device (e.g., the electronic device 104) or the server 108 may be included in the second network 199. The electronic device 101 may be applied to intelligent services (e.g., a smart home, a smart city, a smart car, or healthcare) based on 5G communication technology or loT-related technology.

The electronic device according to various embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be understood that various embodiments of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things unless the relevant context clearly indicates otherwise. As used herein, "A or B", "at least one of A and B", "at least one of A or B", "A, B or C", "at least one of A, B and C", and "A, B, or C," each of which may include any one of the items listed together in the corresponding one of the phrases, or all possible combinations thereof. Terms such as "first", "second", or "first" or "second" may simply be used to distinguish the component from other components in question, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

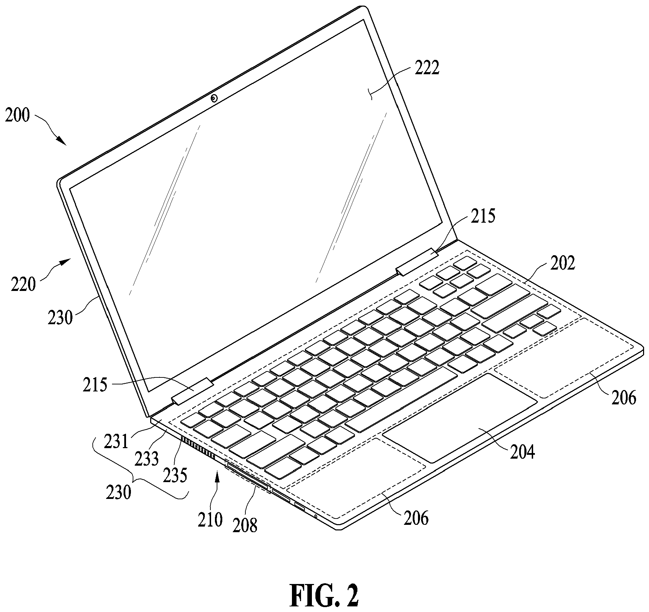

Referring to FIG. 2, an electronic device 200 (e.g., the electronic device 101 of FIG. 1) may include a first housing 210, a connector 215, a display 220 (e.g., the display module 160 of FIG. 1), and a second housing 230. The electronic device 200 may include, for example, a smartphone, a laptop computer, a tablet personal computer (PC), an e-book reader, a portable multimedia device, a portable medical device, a wearable device, or a home appliance.

According to an embodiment, the first housing 210 may include a keyboard 202, a touchpad 204, a palm rest 206, and an antenna module 208. The keyboard 202 (e.g., the input device 150 of FIG. 1) may include a plurality of keys on an upper portion of the first housing 210. The keyboard 202 may receive numeric or character information. The keyboard 202 may include a plurality of input keys and function keys for setting various functions of the electronic device 200. The function keys may include an arrow key, a volume key, and/or a shortcut key set to perform a designated function. The keyboard 203 may include one of a query keypad, a 3*4 keypad, a 4*3 keypad, or a touch key. The touchpad 204 may replace a function of a mouse. The touchpad 204 may input a command to select or execute an application displayed on the display 220. The palm rest 206 may be a pedestal for reducing wrist fatigue of a user of the electronic device 200 when the user is using the keyboard 202. The antenna module 208 (e.g., the antenna module 197 of FIG. 1) may transmit or receive a signal or power to or from an external electronic device (e.g., the electronic device 102 and 104, and/or the server 108 of FIG. 1).

The connector 215 may foldably or unfoldably couple the first housing 210 to the display 220. The connector 215 may mechanically connect the first housing 210 and the display 220. The connector 215 may include, for example, a hinge member between the first housing 210 and the display 220. The connector 215 may electrically connect the first housing 210 and the display 220. The connector 215 may include, for example, a flexible printed circuit board (FPCB) between the first housing 210 and the display 220.

The display 220 may include a screen 222. The screen 222 may display information input by the user and information to be provided to the user using various menus and the keyboard 202 of the electronic device 200. The screen 222 may be formed of at least one of a liquid crystal display (LCD), an organic light-emitting diode (OLED), an active-matrix organic light-emitting diode (AMOLED), a flexible display, or a transparent display. The screen 222 may provide at least one of various screens, such as a home screen, a menu screen, a lock screen, a game screen, a webpage screen, a call screen, or a music or video playback screen according to use of the portable electronic device 200.

The second housing 230 may form an exterior of the first housing 210. The second housing 230 may also be applied to the palm rest 206 positioned in the first housing 210. The second housing 230 may protect at least one electronic component (e.g., the processor 120, the memory 130, the sensor module 176 of FIG. 1, and other electronic components) included in the first housing 210. The second housing 230 may include a first surface 231 covering the upper surface, a second surface 233 covering a side surface, and a third surface 235 covering a rear surface of the first housing 210. The second housing 230 may form an exterior of the display 220. The second housing 230 may protect at least one of various electronic components (e.g., the camera module 180, the sound output device 155 of FIG. 1, and other electronic components) and the screen 222 included in the display 220.

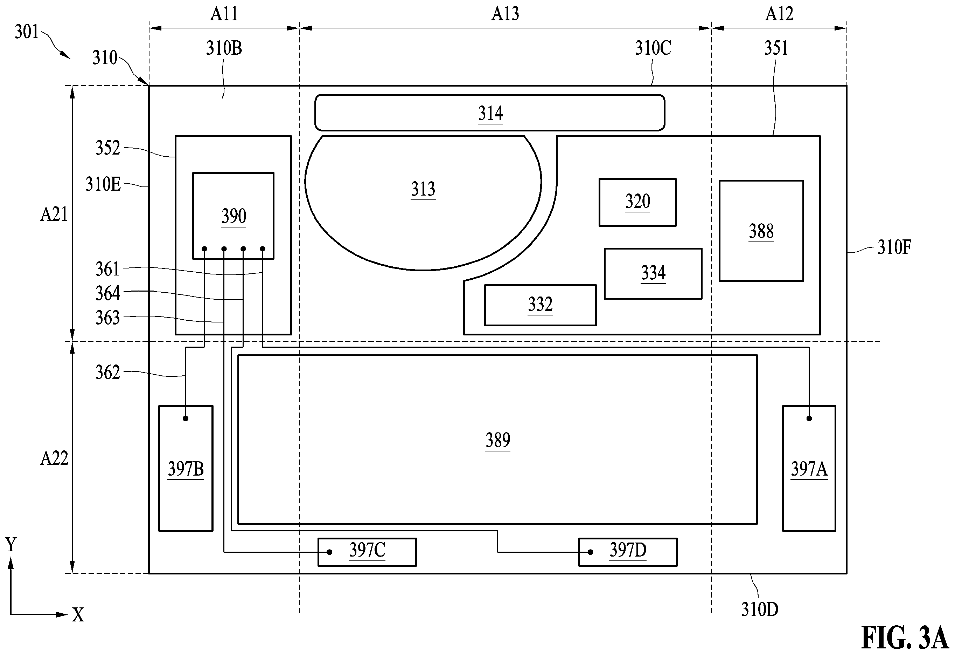

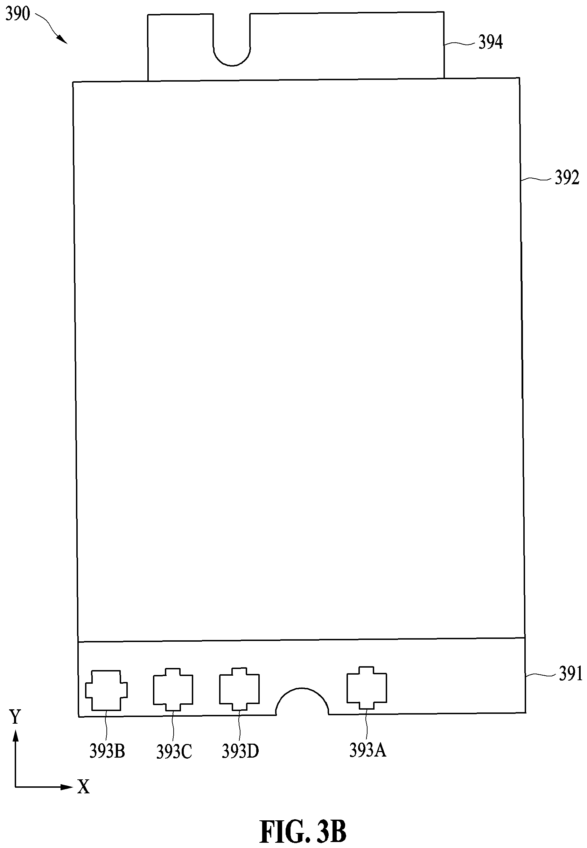

Referring to FIGS. 3A and 3B, an electronic device 301 (e.g., the electronic device 101 of FIG. 1), according to an embodiment, may provide dual connectivity of a first frequency band and a second frequency band. The second frequency band may include a frequency band higher than the first frequency band. For example, the second frequency band may include a millimeter wave frequency band. The first frequency band, for example, as a legacy band, may include a first band (e.g., a low band (LB), about 0.6 GHz to about 1.0 GHz), a second band (e.g., a mid band (MB), about 1.7 GHz to about 2.3 GHz), and a third band (e.g., a high band, HB), about 2.3 GHz to about 2.7 GHz). The second frequency band may include, for example, the first band, the second band, the third band, and a fourth band (e.g., an ultra-high band (UHB), about 3.3 GHz to about 4.3 GHz). The electronic device 301 may transmit and receive a signal of the first frequency band (e.g., an anchor band) in a communications connection with the first base station (e.g., evolved NodeB ("eNB")), communicate with the second base station (e.g., gNodeB ("gNB")), and transmit and receive a signal of the first frequency band and/or the second frequency band.

The electronic device 301 may include a housing 310 (e.g., a first housing 210 of FIG. 2) including a first surface (not shown) (e.g., a front surface), a second surface 310B (e.g., a rear surface) opposite to the first surface, and a plurality of side surfaces 310C, 310D, 310E, 310F between the first surface and the second surface 310B. The plurality of side surfaces 310C, 310D, 310E, 310F may include a first side surface 310C (e.g., an upper surface), a second side surface 310D (e.g., a lower surface) opposite to the first side surface 310C, a third side surface 310E (e.g., a left side) between the first side surface 310C and the second side surface 310D, and a fourth side surface 310F opposite to the third side surface 310E and between the first side surface 310C and the second side surface 310D.

In an embodiment, the housing 310 may have a plurality of areas A11, A12, A13, A21, A22. For example, the housing 310 may have a first area A11 (e.g., a left area) adjacent to the third side surface 310E, a second area A12 (e.g., a right side) adjacent to the fourth side surface 310F, and a third area A13 (e.g., an intermediate area) between the first area A11 and the second area A12. For another example, the housing 310 may have a fourth area A21 (e.g., an upper area) adjacent to the first side surface 310C and a fifth area A22 (e.g., a lower area) adjacent to the second side surface 310D.

The electronic device 301 may include a first printed circuit board 351, a second printed circuit board 352, a cooling module 313, a heat plate 314, a plurality of cables 361, 362, 363, 364, a battery 389 (e.g., the battery 189 of FIG. 1), and a plurality of antennas 397A, 397B, 397C, 397D (e.g., the antenna module 197 of FIG. 1).

The electronic device 301 may include, on the first printed circuit board 351, a processor 320 (e.g., the processor 120), a volatile memory 332 (e.g., the volatile memory 132), a non-volatile memory 334 (e.g., the non-volatile memory 134), and a power management module 388 (e.g., the power management module 188). The electronic device 301 may include a communication module 390 (e.g., the communication module 190) on the second printed circuit board 352. In an embodiment, the first printed circuit board 351 may be located wholly or at least partially at the second area A12, the third area A13, and the fourth area A21. In an embodiment, the second printed circuit board 352 may be located wholly or at least partially at the first area A11 and the fourth area A21.

The cooling module 313 may be configured to reduce heat generated from at least one component of the electronic device 301. The cooling module 313 may include, for example, a fan. In an embodiment, the cooling module 313 may be located wholly or at least partially at the third area A13 and the fourth area A21.

In an embodiment, the heat plate 314 may be located wholly or at least partially at the third area A13 and the fourth area A21. In an embodiment, the heat plate 314 may be located closer to the first side surface 310C than the cooling module 313. The heat plate 314 may be configured to absorb heat generated from at least one component (e.g., the processor 320) of the electronic device 301 and distribute and/or radiate heat to the air and/or to the outside of the housing 310. For example, the heat plate 314 may include a plurality of fins (not shown) for widening a contact area with air.

The battery 389 may supply power to at least one component of the electronic device 301. In an embodiment, the battery 389 may be wholly or at least partially located at the third area A13 and the fifth area A22. In an embodiment, the battery 389 may be located at least partially in one of the first area A11 and the second area A12.

As shown in FIG. 3B, the communication module 390 may include a substrate 391, a shielding 392 configured to shield at least a part of the substrate 391, and a plurality of communication ports 393A, 393B, 393C, 393D located on an area of the substrate 391 that is not shielded by the shielding 392. In an embodiment, the communication module 390 may be offset from the center in the housing 310. For example, the communication module 390 may be located wholly or at least partially at the first area A11 and the fourth area A21. In an embodiment, the shielding 392 may include a metallic material. For example, the shielding 392 may include a metal plate (e.g., a shield can). In various embodiments, the communication module 390 may be described as a communication unit 390.

The plurality of communication ports 393A, 393B, 393C, 393D may include a first communication port 393A, a second communication port 393B, a third communication port 393C, and a fourth communication port 393D. In an embodiment, the first communication port 393A, the second communication port 393B, the third communication port 393C, and the fourth communication port 393D may be arranged in a row in one direction (e.g., +/-x-direction) of the substrate 391. For example, as illustrated in FIG. 3B, the second communication port 393B, the third communication port 393C, the fourth communication port 393D and the first communication port 393A may be sequentially arranged, in that order, in a row in the +x-direction. However, the arrangement structure of the plurality of communication ports 393A, 393B, 393C, 393D may not be limited thereto, and various combinations of arrangement structures may exist according to each position of the plurality of antennas 397A, 397B, 397C, 397D in the housing 310.

The first communication port 393A may support the transmission of a signal of the first band. The first communication port 393A may support the reception of a signal of the first band, the second band, the third band, and the fourth band. In an embodiment, the first communication port 393A may not support the reception of a signal of a GPS band.

The second communication port 393B may support the transmission of a signal of the second band and/or the third band. The second communication port 393B may support a signal of a band different from a band of a transmission signal supported by the first communication port 393B. The band (e.g., a second band and/or third band) of the transmission signal supported by the second communication port 393B may not overlap the band of the transmission signal supported by the first communication port 393A. For example, the first communication port 393A supports transmission of a signal of the first band and the second communication port 393B supports transmission of a signal of the second band and/or third band but not the first band. The second communication port 393B may support the reception of a signal of the first band, the second band, the third band, and the fourth band.

The third communication port 393C may support the reception of a signal of a GPS band. The third communication port 393C may support the reception of a signal of the second band, the third band, and the fourth band. In an embodiment, the third communication port 393C may not support the transmission of any signal.

The fourth communication port 393D may support the transmission of a signal of the fourth band. The fourth communication port 393D may support the reception of a signal of the second band, the third band, and the fourth band.

The communication module 390 may include an interface connector 394 in at least an area of the substrate 391. According to an embodiment, the communication module 390 may be electrically connected to the second printed circuit board 352 through the interface connector 394. According to an embodiment, the interface connector 394 may be integrally formed with the substrate 391. For example, the interface connector 394 may be a mini PCI-express type of interface.

The plurality of antennas 397A, 397B, 397C, 397D may be configured to independently transmit and/or receive a signal of the first frequency band and the second frequency band, respectively. The plurality of antennas 397A, 397B, 397C, 397D may include a first antenna 397A connected to the first communication port 393A, a second antenna 397B connected to the second communication port 393B, a third antenna 397C connected to the third communication port 393C, and a fourth antenna 397D connected to the fourth communication port 393D. Independent transmission and/or reception of a signal of the plurality of antennas 397A, 397B, 397C, 397D may provide various combinations of dual connectivity, secure an expanded frequency band in a limited antenna arrangement space in a housing 310, and reduce performance degradation of each antenna.

The first antenna 397A may be configured to transmit a signal. The transmission of a signal of the first antenna 397A may implement dual connectivity of the first frequency band and the second frequency band. The first antenna 397A may be configured to transmit a signal of the first band. The transmission operation of the first antenna 397A of the first band may secure the transmission performance of the next-generation (e.g., fifth generation) network. The transmission of the signal of the first band of the first antenna 397A may reduce the insertion loss (IL) of a cable (e.g., a first cable 361) between the first antenna 397A and the first communication port 393A. According to the first antenna 397A, since the wavelength of the signal of the first band is longer than that of the signal in another band and the straightness of the signal is relatively not strong, the specific absorption rate (SAR) standard may be satisfied without implementing a power back-off function. The first antenna 397A may operate to a desired level of signal strength even in an environment in which at least a portion of the first antenna 397A is covered by a user (e.g., an environment in which at least a portion of the radiation area of the first antenna 397A is covered by a hand or wrist of the user). The first antenna 397A may be configured to receive a signal of the first band, the second band, the third band, and the fourth band.

The second antenna 397B may be configured to transmit a signal of the second band and/or the third band. According to an example, the band of the signal transmitted by the second antenna 397B does not overlap the band of the signal transmitted by the first antenna 397A. The second antenna 397B may be configured to receive a signal of the first band, the second band, the third band, and the fourth band. In an embodiment, the second antenna 397B may be configured to transmit a signal of a second band different from the first band of the first frequency band while the first antenna 397A transmits a signal of the first band.

In example an embodiment, the distance between the second antenna 397B and the second communication port 393B may be shorter than the distance between the first antenna 397A and the first communication port 393A.

In an embodiment, the first antenna 397A and the second antenna 397B may be located on different sides of the housing 310. For example, the first antenna 397A may be located at the second area A12 adjacent to the fourth side surface 310F, while the second antenna 397B may be located at the first area A11 adjacent to the third side surface 310E. In an embodiment, the first antenna 397A and the second antenna 397B may be located at the fifth area A22 with the battery 389 interposed therebetween. The physical separation of the first antenna 397A and the second antenna 397B, as shown in FIG. 3A, may function as an ultra-wideband antenna reaching the second frequency band. The physical separation between the first antenna 397A and the second antenna 397B may reduce interference effects (e.g., an envelope correlation coefficient (ECC)) between the first antenna 397A and the second antenna 397B.

The first antenna 397A and the second antenna 397B may support full dual connectivity by individually transmitting a signal of some bands belonging to the first frequency band while transmitting a signal of the entire range of the first frequency band. The separation of the band of the signal transmitted by the first antenna 397A and the band of the signal transmitted by the second antenna 397B may compensate for the transmission performance of the antenna that may be degraded due to the bandwidth expansion of the electronic device 301 in the next-generation network.

According to an embodiment, the third antenna 397C may be configured not to transmit any signal. The third antenna 397C may be configured to receive a signal of the second band, the third band, and the fourth band.

In an embodiment, the third antenna 397C may be configured to receive a signal of a band that is not received by another antenna (e.g., a first antenna 397A). For example, the third antenna 397C may be configured to receive a signal of a GPS band. Adding the third antenna 397C for receiving a signal of the GPS band to the electronic device 301 may provide for the operation of dual connectivity of the first antenna 397A configured to transmit the signal of the first band. According to an embodiment, when the first sub-band (e.g., about 777 MHz to about 787 MHz) and/or the second sub-band (e.g., about 788 MHz to about 798 MHz) of the first band in which the first antenna 397A operates is operated as an anchor band for dual connectivity, the first sub-band and/or the second sub-band may overlap the GPS band in second harmonics (e.g., about 1,574 MHz), and, thus, when the third antenna 397C receives a signal of the GPS band, the performance of the first antenna 397A may be ensured.

In an embodiment, the third antenna 397C may be located at the fifth area A22 adjacent to the second side surface 310D. According to an embodiment, the third antenna 397C may be located between the battery 389 and the second side surface 310D. In an embodiment, the third antenna 397C may be located wholly or at least partially at the third area A13. In another embodiment, the third antenna 397C may be located wholly or at least partially at the first area A11.

In an embodiment, the third antenna 397C may be a multiple input multiple output (MIMO) antenna.

The fourth antenna 397D may be configured to transmit a signal of the fourth band. The fourth antenna 397D may be configured to receive a signal of the second band, the third band, and the fourth band.

In an embodiment, the fourth antenna 397D may be located in the housing 310 spaced apart from the first antenna 397A and the second antenna 397B. For example, the fourth antenna 397D may be located wholly or at least partially at the fifth area A22 adjacent to the second side surface 310D. The fourth antenna 397D may be located wholly or at least partially between the battery 389 and the second side surface 310D. In an embodiment, the fourth antenna 397D may be located wholly or at least partially at the third area A13. The arrangement structure of the fourth antenna 397D may reduce, in an electronic device 301 supporting dual connectivity, when transmitting and receiving a signal of a first frequency band and a signal of a second frequency band at the same time, interference (e.g., a frequency intermodulation distortion) between the fourth antenna 397D and the first antenna 397A and/or between the fourth antenna 397D and the second antenna 397B, and provide for the quintel optimal separation (QoS) of a wireless signal.

In an embodiment, the fourth antenna 397D may be MIMO antenna.

The plurality of cables 361, 362, 363, 364 may include a first cable 361 connecting the first communication port 393A and the first antenna 397A, the second cable 362 connecting the second communication port 393B and the second antenna 397B, the third cable 363 connecting the third communication port 393C and the third antenna 397C, and the fourth cable 364 connecting the fourth communication port 393D and the fourth antenna 397D. The first cable 361, the second cable 362, the third cable 363, and the fourth cable 364 may be, for example, coaxial cables, but may not be limited thereto and may be any cable suitable for reducing insertion loss. For example, at least one of the first cable 361, the second cable 362, the third cable 363, and/or the fourth cable 364 may be a flat ribbon cable (FRC) and/or a compatible cable (e.g., a 2-in-1 cable).

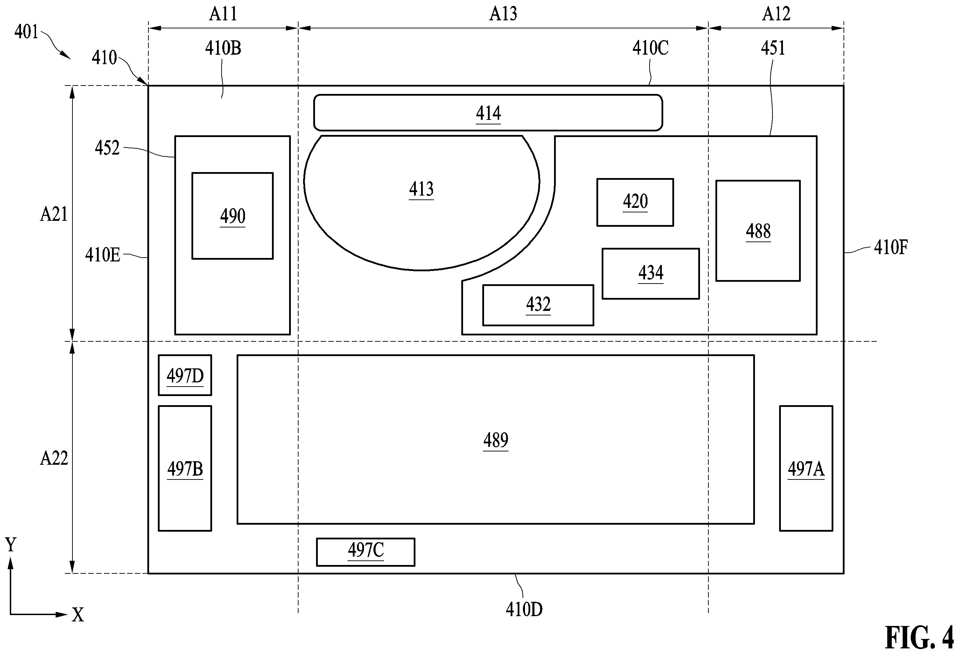

Referring to FIG. 4, the electronic device 401 (e.g., the electronic device 301 of FIG. 3A), according to an embodiment, may include a housing 410 (e.g., the housing 310) including a first surface, a second surface 410B (e.g., the second surface 310B), a first side surface 410C (e.g., the first side surface 310C), a second side surface 410D (e.g., the second side surface 310D), a third side surface 410E (e.g., the third side surface 310E), and a fourth side surface 410F (e.g., the fourth side surface 310F). The housing 410 may have a first area A11 (e.g., a left area) adjacent to the third side surface 410E, a second area A12 (e.g., a right area) adjacent to the fourth side surface 410F, and a third area A13 (e.g., an intermediate area) between the first area A11 and the second area A12. The housing 410 may have a fourth area A21 (e.g., an upper area) adjacent to the first side surface 410C and a fifth area A22 (e.g., a lower area) adjacent to the second side surface 410D.

The electronic device 401 may include a first printed circuit board 451 (e.g., the first printed circuit board 351), a second printed circuit board 452 (e.g., the second printed circuit board 352), a cooling module 413 (e.g., the cooling module 313), a heat plate 414 (e.g., the heat plate 314), and a plurality of cables (not shown) (e.g., the first cable 361, the second cable 362, the third cable 363, and the fourth cable 364).

The electronic device 401 may include, on the first printed circuit board 451, a processor 420 (e.g., the processor 120 of FIG. 1), a volatile memory 432 (e.g., the volatile memory 132), a non-volatile memory 434 (e.g., the non-volatile memory 134), and a power management module 488 (e.g., the power management module 188). The electronic device 401 may include a communication module 490 (e.g., the communication module 390 of FIGS. 3A and 3B) on the second printed circuit board 452.

The electronic device 401 may include a first antenna 497A (e.g., the first antenna 397A), a second antenna 497B (e.g., the second antenna 397B), a third antenna 497C (e.g., the third antenna 397C), and a fourth antenna 497D (e.g., the fourth antenna 397D).

In an embodiment, the fourth antenna 497D may be located wholly or at least partially at the first area A11 and the fifth area A22. In an embodiment, the fourth antenna 497D may be located adjacent to the second antenna 497B when it is possible to secure the target QoS when the frequency intermodulation distortion occurs with the second antenna 497B. In an embodiment, the third antenna 497C may be located closer to the communication module 490 than the second antenna 497B is to the communication module 490.

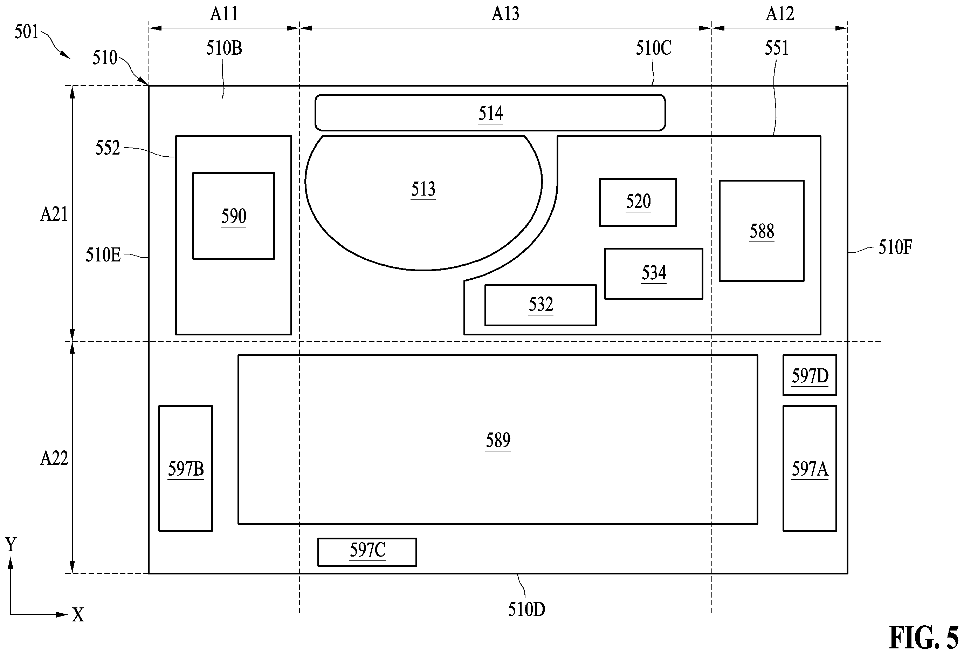

Referring to FIG. 5, the electronic device 501 (e.g., the electronic device 301 of FIG. 3A), according to an embodiment, may include a housing 510 (e.g., the housing 310) including a first surface, a second surface 510B (e.g., the second surface 310D), a first side surface 510C (e.g., the first side surface 310C), a second side surface 510D (e.g., the second side surface 310D), a third side surface 510E (e.g., the third side surface 310E), and a fourth side surface 510F (e.g., the fourth side surface 310F). The housing 510 may have a first area A11 (e.g., a left area) adjacent to the third side surface 510E, a second area A12 (e.g., a right area) adjacent to the fourth side surface 510F, and a third area A13 (e.g., an intermediate area) between the first area A11 and the second area A12. The housing 510 may have a fourth area A21 (e.g., an upper area) adjacent to the first side surface 510C and a fifth area A22 (e.g., a lower area) adjacent to the second side surface 510D.

The electronic device 501 may include a first printed circuit board 551 (e.g., the first printed circuit board 351), a second printed circuit board 552 (e.g., the second printed circuit board 352), a cooling module 513 (e.g., the cooling module 313), a heat plate 514 (e.g., the heat plate 314), and a plurality of cables (e.g., the first cable 361, the second cable 362, the third cable 363, and the fourth cable 364).

The electronic device 501 may include, on the first printed circuit board 551, a processor 520 (e.g., the processor 120 of FIG. 1), a volatile memory 532 (e.g., the volatile memory 132), a non-volatile memory 534 (e.g., the non-volatile memory 134), and a power management module 588 (e.g., the power management module 188). The electronic device 501 may include a communication module 590 (e.g., the communication module 390 of FIGS. 3A and 3B) on the second printed circuit board 552.

The electronic device 501 may include a first antenna 597A (e.g., the first antenna 397A), a second antenna 597B (e.g., the second antenna 397B), a third antenna 597C (e.g., the third antenna 397C), and a fourth antenna 597D (e.g., the fourth antenna 397D).

In an embodiment, the fourth antenna 597D may be located wholly or at least partially at the second area A12 and the fifth area A22. In an embodiment, the fourth antenna 597D may be located adjacent to the first antenna 597A when the insertion loss of the cable (e.g., the fourth cable 364) between the communication module 590 and the fourth antenna 597D may be reduced within the target insertion loss, and/or when it is possible to secure the target QoS when the frequency intermodulation distortion occurs with the first antenna 597A. In an embodiment, the fourth antenna 597D may be located closer to the communication module 590 than the first antenna 597A is to the communication module 590.

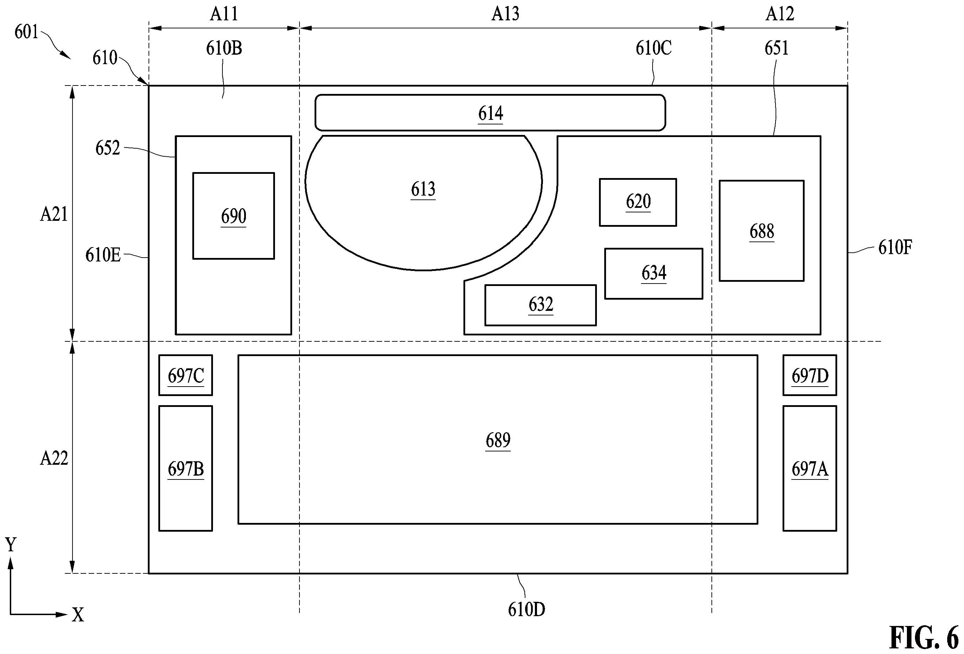

Referring to FIG. 6, the electronic device 601 (e.g., the electronic device 301 of FIG. 3A), according to an embodiment, may include a housing 610 (e.g., the housing 310) including a first surface, a second surface 610B (e.g., the second surface 310B), a first side surface 610C (e.g., the first side surface 310C), a second side surface 610D (e.g., the second side surface 310D), a third side surface 610E (e.g., the third side surface 310E), and a fourth side surface 610F (e.g., the fourth side surface 310F). The housing 610 may have a first area A11 (e.g., a left area) adjacent to the third side surface 610E, a second area A12 (e.g., a right area) adjacent to the fourth side surface 610F, and a third area A13 (e.g., an intermediate area) between the first area A11 and the second area A12. The housing 510 may have a fourth area A21 (e.g., an upper area) adjacent to the first side surface 610C and a fifth area A22 (e.g., a lower area) adjacent to the second side surface 610D.

The electronic device 501 may include a first printed circuit board 651 (e.g., the first printed circuit board 351), a second printed circuit board 652 (e.g., the second printed circuit board 352), a cooling module 613 (e.g., the cooling module 313), a heat plate 614 (e.g., the heat plate 314), and a plurality of cables (e.g., the first cable 361, the second cable 362, the third cable 363, and the fourth cable 364).

The electronic device 601 may include, on the first printed circuit board 651, a processor 620 (e.g., the processor 120 of FIG. 1), a volatile memory 632 (e.g., the volatile memory 132), a non-volatile memory 634 (e.g., the non-volatile memory 134), and a power management module 688 (e.g., the power management module 188). The electronic device 601 may include a communication module 690 (e.g., the communication module 390 of FIGS. 3A and 3B) on the second printed circuit board 652.

The electronic device 601 may include a first antenna 697A (e.g., the first antenna 397A), a second antenna 697B (e.g., the second antenna 397B), a third antenna 697C (e.g., the third antenna 397C), and a fourth antenna 697D (e.g., the fourth antenna 397D).

In an embodiment, the third antenna 697C may be located wholly or at least partially at the first area A11 and the fifth area A22, and the fourth antenna 697D may be located wholly or at least partially at the second area A12 and the fifth area A22. In an embodiment, the third antenna 697C may be located adjacent to the second antenna 697B, and the fourth antenna 697D may be located adjacent to the first antenna 697A. In an embodiment, the third antenna 697C may be located closer to the communication module 690 than the second antenna 697B is to the communication module 690, and the fourth antenna 697D may be located closer to the communication module 690 than the first antenna 697A is to the communication module 690.

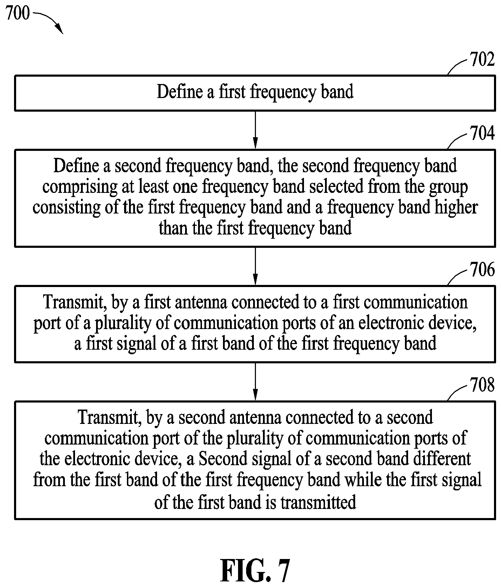

FIG. 7 depicts a flow diagram of a method 700 according to an embodiment. The method 700 can be performed by any suitable device, such as the electronic device 301, the electronic device 401, the electronic device 501, the electronic device 601, and/or the like, including combinations and/or multiples thereof.

At block 702, a first frequency band is defined. At block 704, a second frequency band is defined. The second frequency band includes at least one of the first frequency band and a frequency band higher than the first frequency band. At block 706, the electronic device (e.g., the electronic device 301) transmits, by a first antenna (e.g., the first antenna 397A) connected to a first communication port (e.g., the first communication port 393A) of a plurality of communication ports (e.g., the communication ports 393A-393D) of an electronic device, a first signal of a first band of the first frequency band. At block 708, the electronic device (e.g., the electronic device 301) transmits, by a second antenna (e.g., the second antenna 397B) connected to a second communication port (e.g., the second communication port 393B) of the plurality of communication ports of the electronic device, a second signal of a second band different from the first band of the first frequency band while the first signal of the first band is transmitted.

According to an embodiment, the electronic device 301 relates to an electronic device 301 for providing dual connectivity of a second frequency band (LB, MB, HB, UHB) including a first frequency band (LB, MB, HB) and/or a frequency band higher than the first frequency band (LB, MB, HB), may include a communication unit including a plurality of communication ports 393A, 393B, 393C, 393D, a first antenna 397A connected to a first communication port 393A of the plurality of communication ports 393A, 393B, 393C, 393D and configured to transmit a signal of a first band (LB) of the first frequency band (LB, MB, HB), and a second antenna 397B connected to a second communication port 393B of the plurality of communication ports 393A, 393B, 393C, 393D and configured to transmit a signal of a second band (MB, HB) different from the first band (LB) of the first frequency band (LB, MB, HB) while the signal of the first band (LB) is transmitted.

In an embodiment, the first frequency band (LB, MB, HB) may belong to the second frequency band (LB, MB, HB, UHB).

In an embodiment, the first band (LB) and the second band (MB, HB) may not overlap.

In an embodiment, the electronic device 301 may further include a housing 310 including a first side surface 310C, a second side surface 310D opposite to the first side surface 310C, a third side surface 310E between the first side surface 310C and the second side surface 310D, and a fourth side surface 310F opposite to the third side surface 310E and between the first side surface 310C and the second side surface 310D, and the first antenna 397A may be located adjacent to the fourth side surface 310F in the housing, and the second antenna 397B may be located adjacent to the third side surface 310E in the housing 310.

In an embodiment, the communication unit 390 may be located adjacent to the third side surface 310E.

In an embodiment, a distance between the first communication port 393A and the first antenna 397A may be greater than a distance between the second communication port 393B and the second antenna 397B.

In an embodiment, the first antenna 397A may be configured not to receive a signal of a global positioning system (GPS) frequency band.

In an embodiment, the electronic device 301 may further include the third antenna 397C connected to the third communication port 393C of the plurality of communication ports 393A, 393B, 393C, 393D and configured to receive a signal of the GPS frequency band.

In an embodiment, the third antenna 397C may be configured to not transmit any signal.

In an embodiment, the electronic device 301 may further include a fourth antenna 397D connected to a fourth communication port 393D of the plurality of communication ports 393A, 393B, 393C, 393D and configured to transmit a signal of a band (UHB) that does not overlap the first frequency band (LB, MB, HB) of the second frequency band (LB, MB, HB, UHB).

In an embodiment, the fourth antenna 397D may be spaced apart from the first antenna 397A and the second antenna 397B, respectively.

In an embodiment, the plurality of communication ports 393A, 393B, 393C, 393D may include a third communication port 393C located between the first communication port 393A and the second communication port 393B and for receiving a signal in the GPS band, a fourth communication port 393D located between the second communication port 393B and the third communication port 393C and for transmitting a signal of a band (UHB) that does not overlap the first frequency band (LB, MB, HB) of the second frequency band (LB, MB, HB, UHB). The first communication port 393A, the third communication port 393C, the fourth communication port 393D, and the second communication port 393B may be sequentially arranged in a row.

In an embodiment, the electronic device 401 may further include a housing 410 including a first side surface 410C, a second side surface 410D opposite to the first side surface 410C, a third side surface 410E between the first side surface 410C and the second side surface 410D, and a fourth side surface 410F opposite to the third side surface 410E and between the first side surface 410C and the second side surface 410D, and the second antenna 497B and the fourth antenna 497D may be located adjacent to the third side surface 410E in the housing 410, and the first antenna 497A may be located adjacent to the fourth side surface 410F in the housing 410.

In an embodiment, the electronic device 501 may further include a housing 510 including a first side surface 510C, a second side surface 510D opposite to the first side surface 510C, a third side surface 510E between the first side surface 510C and the second side surface 510D, and a fourth side surface 510F opposite to the third side surface 510E and between the first side surface 510C and the second side surface 510D, and the second antenna 597B may be located adjacent to the third side surface 510E in the housing 510, and the first antenna 597A and the fourth antenna 597D may be located adjacent to the fourth side surface 510F in the housing 510.

In an embodiment, the electronic device 601 may further include a fourth antenna 697D connected to a fourth communication port 393D of the plurality of communication ports 393A, 393B, 393C, 393D and configured to transmit a signal of a band (UHB) that does not overlap the first frequency band (LB, MB, HB) of the second frequency band (LB, MB, HB, UHB), and a housing 610 including a first side surface 610C, a second side surface 610D opposite the first side face 610C, a third side surface 610E between the first side surface 610C and the second side surface 610D, and a fourth side surface 610F opposite to the third side surface 610E and between the first side surface 610C and the second side surface 610D. The first antenna 697A and the fourth antenna 697D may be located at the fourth side surface 610F in the housing 610, and the second antenna 697B and the third antenna 697C may be located at the third side surface 610E in the housing 610.

One aspect of the disclosure may provide a communication module for expanding the frequency band coverage of a next-generation network and an electronic device including the same.

According to an embodiment, the electronic device 301 relates to an electronic device 301 for providing dual connectivity of a second frequency band (LB, MB, HB, UHB) including a first frequency band (LB, MB, HB) and/or a frequency band higher than the first frequency band (LB, MB, HB), may include a housing 310 including a first side surface 310C, a second side surface 310D opposite to the first side surface 310C, a third side surface 310E between the first side surface 310C and the second side surface 310D, and a fourth side surface 310F opposite to the third side surface 310E and between the first side surface 310C and the second side surfaces 310D, a communication unit 390 located adjacent to the third side surface 310E in the housing 310 and including a plurality of communication ports 393A, 393B, 393C, 393D, a first antenna 397A located adjacent to the fourth side surface 310F in the housing 310, connected to a first communication port 393A of the plurality of communication ports 393A, 393B, 393C, 393D, and configured to transmit a signal of a first band (LB) of the first frequency band (LB, MB, HB), and a second antenna 397B located adjacent to the third side surface 310E in the housing 310, connected to a second communication port 393B of the plurality of communication ports 393A, 393B, 393C, 393D, and configured to transmit a signal of a second band (MB, HB) different from the first band (LB) of the first frequency band (LB, MB, HB) while the signal of the first band (LB) is transmitted.

In an embodiment, the electronic device 301 may further include a third antenna 397C located adjacent to the second side surface 310D in the housing 310, connected to a third communication port 393C of the plurality of communication ports 393A, 393B, 393C, 393D, and configured to receive a signal of a GPS frequency band.

In an embodiment, the electronic device 301 may further include a fourth antenna 397D located adjacent to the second side surface 310D in the housing 310, connected to a fourth communication port 393D of the plurality of communication ports 393A, 393B, 393C, 393D, and configured to transmit a signal of a band (UHB) that does not overlap the first frequency band (LB, MB, HB) of the second frequency band (LB, MB, HB, UHB).

In an embodiment, the plurality of communication ports 393A, 393B, 393C, 393D may include a third communication port 393C located at the first communication port 393A and the second communication port 393B, and located between the first communication port 393A and the second communication port 393B and for receiving a signal of a GPS band, and a fourth communication port 393D located between the second communication port 393B and the third communication port 393C for transmitting a signal of a band (UHB) that does not overlap the first frequency band (LB, MB, HB) of the second frequency band (LB, MB, HB, UHB). The first communication port 393A, the third communication port 393C, the fourth communication port 393D, and the second communication port 393B may be sequentially arranged in a row.

According to an embodiment, the communication module 390 relates to an communication module 390 for providing dual connectivity of a second frequency band (LB, MB, HB, UHB) including a first frequency band (LB, MB, HB) and/or a frequency band higher than the first frequency band (LB, MB, HB), may include a first communication port 393A for transmitting a signal of a first band (LB) of the first frequency band (LB, MB, HB), a second communication port 393B for transmitting a signal of a second band (MB, HB) different from the first band (LB) of the first frequency band (LB, MB, HB) while the signal of the first band (LB) is transmitted, a third communication port 393C located between the first communication port 393A and the second communication port 393B and for receiving a signal of a GPS band, and a fourth communication port 393D located between the second communication port 393B and the third communication port 393C and for transmitting a signal of a band (UHB) that does not overlap the first frequency band (LB, MB, HB) of the second frequency band (LB, MB, HB, UHB). The first communication port 393A, the third communication port 393C, the fourth communication port 393D, and the second communication port 393B may be sequentially arranged in a row.

According to an embodiment, a method 700 is provided. The method 700 includes defining a first frequency band and defining a second frequency band. The second frequency band comprises at least one frequency band selected from the group consisting of the first frequency band and a frequency band higher than the first frequency band. The method 700 further includes by a first antenna (e.g., the first antenna 397A) connected to a first communication port (e.g., the first communication port 393A) of a plurality of communication ports (e.g., the communication ports 393A-393D) of an electronic device, a first signal of a first band of the first frequency band. The method 700 further includes transmitting by a second antenna (e.g., the second antenna 397B) connected to a second communication port (e.g., the second communication port 393B) of the plurality of communication ports of the electronic device, a second signal of a second band different from the first band of the first frequency band while the first signal of the first band is transmitted.

According to an embodiment, the frequency band coverage of a next-generation network (e.g., fifth generation) may be expanded in the electronic device having a limited antenna arrangement space. According to an embodiment, the bandwidth and total radiated power (TRP) of a transmission signal may be improved. According to an embodiment, the TRP of an antenna for transmitting a signal of a relatively low-frequency band (e.g., about 0.6 GHz to about 1.0 GHz) may be improved and may be applied to the specific absorption rate (SAR) standard without a sensor (e.g., grip sensor) for power backoff. The effects of the communication module and the electronic device including the same, according to various embodiments, are not be limited to the aforementioned effects, and other unmentioned effects may be clearly understood from the following description by a person skilled in the art.

Features of the above described embodiments and aspects can be combined unless their combining results in evident technical conflicts.

## Claims

1. An electronic device (301) for providing dual connectivity of a second frequency band (LB, MB, HB, UHB), comprising:
a communication unit (390) including a plurality of communication ports (393A, 393B, 393C, 393D);
a first antenna (397A) connected to a first communication port (393A) of the plurality of communication ports (393A, 393B, 393C, 393D) and configured to transmit a signal of a first band (LB) of a first frequency band (LB, MB, HB); and
a second antenna (397B) connected to a second communication port (393B) of the plurality of communication ports (393A, 393B, 393C, 393D) and configured to transmit a signal of a second band (MB, HB) different from the first band (LB) of the first frequency band (LB, MB, HB) while the signal of the first band (LB) is transmitted, the second frequency band (LB, MB, HB, UHB) comprising at least one frequency band selected from the group consisting of the first frequency band (LB, MB, HB) and a frequency band higher than the first frequency band (LB, MB, HB).

2. The electronic device of claim 1, wherein the first frequency band (LB, MB, HB) belongs to the second frequency band (LB, MB, HB, UHB).

3. The electronic device of claim 1 or 2, wherein the first band (LB) and the second band (MB, HB) do not overlap.

4. The electronic device of any of claims 1 to 3, further comprising:
a housing (310) including a first side surface (310C), a second side surface (310D) opposite to the first side surface (310C), a third side surface (310E) between the first side surface (310C) and the second side surface (310D), and a fourth side surface (310F) opposite to the third side surface (310E) and between the first side surface (310C) and the second side surface (310D),
wherein the first antenna (397A) is located adjacent to the fourth side surface (310F) in the housing (310) and the second antenna (397B) is located adjacent to the third side surface (310E) in the housing (310).

5. The electronic device of any of claims 1 to 4, wherein the communication unit (390) is located adjacent to the third side surface (310E).

6. The electronic device of any of claims 1 to 5, wherein a distance between the first communication port (393A) and the first antenna (397A) is greater than a distance between the second communication port (393B) and the second antenna (397B).

7. The electronic device of any of claims 1 to 6, wherein the first antenna (397A) is configured not to receive a signal of a global positioning system frequency band.

8. The electronic device of any of claims 1 to 7, further comprising:
a third antenna (397C) connected to a third communication port (393C) of the plurality of communication ports (393A, 393B, 393C, 393D) and configured to receive a signal of a global frequency system frequency band.

9. The electronic device of any of claims 1 to 8, wherein the third antenna (397C) is configured not to transmit any signal.

10. The electronic device of any of claims 1 to 9, further comprising:
a fourth antenna (397D) connected to a fourth communication port (393D) of the plurality of communication ports (393A, 393B, 393C, 393D) and configured to transmit a signal of a band (UHB) that does not overlap the first frequency band (LB, MB, HB) of the second frequency band (LB, MB, HB, UHB).

11. The electronic device of any of claims 1 to 10, wherein the fourth antenna (397D) is spaced apart from the first antenna (397A) and the second antenna (397B), respectively.

12. The electronic device of any of claims 1 to 11, wherein the plurality of communication ports (393A, 393B, 393C, 393D) comprises:
the first communication port (393A),
the second communication port (393B),
a third communication port (393C) located between the first communication port (393A) and the second communication port (393B) and for receiving a signal of a GPS band; and
a fourth communication port (393D) located between the second communication port (393B) and the third communication port (393C) and for transmitting a signal of a band (UHB) that does not overlap the first frequency band (LB, MB, HB) of the second frequency band (LB, MB, HB, UHB),
wherein the first communication port (393A), the third communication port (393C), the fourth communication port (393D), and the second communication port (393B) are arranged sequentially in a row.

13. The electronic device of any of claims 1 to 12, further comprising:
a housing (410) including a first side surface (410C), a second side surface (410D) opposite to the first side surface (410C), a third side surface (410E) between the first side surface (410C) and the second side surface (410D), and a fourth side surface (410F) opposite to the third side surface (410E) and between the first side surface (410C) and the second side surface (410D),
wherein the second antenna (497B) and the fourth antenna (497D) are located adjacent to the third side surface (410E) in the housing (410), and the first antenna (497A) is located adjacent to the fourth side surface (410F) in the housing (410).

14. The electronic device of any of claims 1 to 13, further comprising:
a housing (510) including a first side surface (5 10C), a second side surface (5 10D) opposite to the first side surface (5 10C), a third side surface (5 10E) between the first side surface (5 10C) and the second side surface (510D), and a fourth side surface (510F) opposite to the third side surface (510E) and between the first side surface (510C) and the second side surface (510D),
wherein the second antenna (597B) is located adjacent to the third side surface (510E) in the housing (510) and the first antenna (597A) and the fourth antenna (597D) are located adjacent to the fourth side surface (5 10F) in the housing (510).

15. The electronic device of any of claims 1 to 14, further comprising:
a fourth antenna (697D) connected to a fourth communication port (393D) of the plurality of communication ports (393A, 393B, 393C, 393D) and configured to transmit a signal of a band (UHB) that does not overlap the first frequency band (LB, MB, HB) of the second frequency band (LB, MB, HB, UHB); and
a housing (610) including a first side surface (610C), a second side surface (610D) opposite to the first side surface (610C), a third side surface (610E) between the first side surface (610C) and the second side surface (610D), and a fourth side surface (610F) opposite to the third side surface (610E) and between the first side surface (610C) and the second side surface (610D),
wherein the first antenna (697A) and the fourth antenna (697D) are located adjacent to the fourth side surface (610F) in the housing (610) and the second antenna (697B) and the third antenna (697C) are located adjacent to the third side surface (610E) in the housing (610).
